# EUROPEAN PATENT SPECIFICATION

(11) **EP 4 499 993 B1**
(45) Date of publication and mention of the grant of the patent: **01.07.2026**
(21) Application number: 23718680.4
(22) Date of filing: 28.03.2023
(51) Int. Cl.: F01P 11/02, B62K 5/10, B62K 5/08, B62K 5/027, B62J 41/00

(54) **THREE-WHEEL MOTORCYCLE WITH MULTIPURPOSE SUPPORT STRUCTURE IN THE FRONT END**
DREIRÄDRIGES MOTORRAD MIT MEHRZWECKSTÜTZSTRUKTUR IM VORDEREN ENDE
MOTOCYCLETTE À TROIS ROUES AVEC STRUCTURE DE SUPPORT POLYVALENTE À L'AVANT

(30) Priority: 29.03.2022 IT 202200006176
(43) Date of publication of application: 05.02.2025
(73) Proprietor: Piaggio & C. S.P.A., 56025 Pontedera Pisa (IT)
(72) Inventor: MELIGHETTI, Paolo, 56025 Pontedera (PI) (IT)
(74) Representative: Savi, Massimiliano
(86) International application number: PCT/IB2023/053057
(87) International publication number: WO 2023/187633

(56) References cited:
- WO-A1-2020/121144
- JP-A- 2002 173 069
- JP-U- H0 512 385
- US-A1- 2007 074 682
- US-A1- 2007 122 671
- US-A1- 2008 236 918
- ANONYMOUS: "(20+) Facebook", 10 October 2019 (2019-10-10), pages 1 - 2, XP093054528, Retrieved from the Internet <URL:https://www.facebook.com/photo?fbid=2784717574881155&set=pcb.2784717654881147> [retrieved on 20230614]
- "Piaggio MP3", 31 December 2007, PIAGGIO, pages: 1 - 1, XP093054536
- ANONYMOUS: "(20+) Facebook", 10 October 2019 (2019-10-10), pages 1 - 2, XP093054530, Retrieved from the Internet <URL:https://www.facebook.com/photo?fbid=2784717498214496&set=pcb.2784717654881147> [retrieved on 20230614]
- ANONYMOUS: "(20+) Facebook", 10 October 2019 (2019-10-10), pages 1 - 2, XP093054528, Retrieved from the Internet <URL:https://www.facebook.com/photo?fbid=2784717574881155&set=pcb.2784717654881147> [retrieved on 20230614]

## Description

### FIELD OF THE INVENTION

The present invention falls within the scope of manufacturing saddle-ride motorcycles, in particular three-wheeled. In particular, the invention relates to a three-wheeled motorcycle provided with a shield support structure in the front end, wherein said structure also supports the expansion vessel of the cooling circuit of the power assembly of the motorcycle.

### PRIOR ART

Over the last few years, the demand for three-wheeled motorcycles in which two front wheels are steering and one rear wheel is driven has increased. In these vehicles, the two front wheels are connected to the vehicle frame so as to be tilting laterally, following a rolling movement around an axis oriented according to the direction of travel.

In a three-wheeled motorcycle, an articulated quadrilateral mechanism is provided between the two front wheels and a front part of the frame to allow for roll of the front wheels. Typically, the articulated quadrilateral mechanism comprises a pair of cross members, each of which is hinged to the frame at the centreline longitudinal plane, so as to oscillate around mutually parallel axes. The quadrilateral also comprises a pair of uprights for each of which the two ends are hinged to a corresponding one of the two cross members, defining rotation axes parallel to those of the cross members with respect to the frame. The two uprights are connected, directly or indirectly, to the wheels so as to allow them to steer. The steering movement is controlled by a steering system which is operationally independent of the quadrilateral mechanism.

In a three-wheeled motorcycle, a suspension assembly is also provided which includes, for each front wheel, a suspension interposed between the wheel itself and the corresponding upright of the quadrilateral. For each front wheel, said suspension comprises at least one shock absorber which allows the up and down movement of the corresponding front wheel with respect to the quadrilateral.

In a three-wheeled motorcycle there are various devices and/or systems designed to allow it to function correctly. Among these devices is identified the anti-roll device for blocking, when activated, the deformation of the quadrilateral so as to avoid, for example, the overturning of the motorcycle when it is parked. Another device typically installed is the one normally indicated with the acronym ABS (*Antilock-Braking-System*) configured to prevent the front wheels from locking in the event of sudden braking and therefore to allow the front end to maintain its directionality.

In addition to these devices, a three-wheeled motorcycle also includes a power assembly cooling system. Typically, the cooling system comprises a radiator and an expansion vessel connected together via a pair of hydraulic pipes according to a widely known principle. In more recent solutions, the radiator is supported by the main frame of the motorcycle in a frontally central position, i.e. between the two front wheels, and in a longitudinal position just behind the same front wheels.

The front part of the motorcycle normally provides for the installation of a protection shield which defines the aerodynamics of the motorcycle. The shield is connected, directly or indirectly, to the motorcycle frame in order to follow its rolling movements. The fairing is complemented by a counter-shield facing the rider while the motorcycle is in motion. The counter-shield is also supported by the motorcycle frame.

In view of the above, it is necessary for manufacturers of three-wheel motorcycles to find technical solutions that facilitate the positioning of the large number of devices and/or systems to be installed at or near the front end. The Applicant has found that in several known three-wheel motorcycles, the arrangement of the above-mentioned devices does not allow easy access and/or inspection of the devices. In the case, for example, of the cooling system, it was found that it was necessary to place the expansion vessel in a more favourable and more accessible position than that normally assigned in conventional motorcycles. Document XP093054528 discloses a Piaggio MP3 having all features of the preamble of claim 1.

### SUMMARY

The main task of the present invention is to provide a three-wheeled motorcycle which allows the drawbacks indicated above to be solved or at least mitigated. Within the scope of this aim, a first object of the present invention is to provide a three-wheeled motorcycle in which the devices installed at the front end are easily accessible and can be inspected. Another object is to provide a motorcycle which is reliable and easy to manufacture at competitive costs.

The Applicant has found that the aim and objects listed above can be achieved by using a multi-purpose support structure which supports, in a position in front of the articulated quadrilateral, a plurality of components and/or devices of the motorcycle in the front part, in particular at least one the protective shield and at least the expansion vessel of the motorcycle's cooling system.

In particular, the task and objects are achieved through a three-wheeled saddle-ride motorcycle comprising at least two steering and rolling front wheels and at least one driving rear wheel, wherein said motorcycle further comprises a main frame which supports a power assembly, where said frame includes a frame front part which configures a steering head.

The motorcycle according to the invention also comprises a rolling articulated quadrilateral connected to the frame front part and supporting the front wheels allowing them to roll. The motorcycle further includes a suspension assembly interposed between the front wheels and the rolling articulated quadrilateral to allow an up and down movement of the front wheels with respect to the rolling articulated quadrilateral. The motorcycle further includes a steering assembly configured to steer the front wheels.

The motorcycle according to the invention comprises a support structure connected, directly or indirectly, to the frame front part, wherein a protection shield of the motorcycle and an expansion vessel of a cooling system of the power assembly are connected to the support structure, wherein said expansion vessel occupies a longitudinal position between the shield and the steering head. This vehicle architecture makes it possible to exploit the space created behind the front shield to arrange the expansion vessel. This arrangement, in addition to exploiting a volume also left empty, allows easier access to the radiator from the front of the vehicle.

According to the invention, the motorcycle comprises a cooling system comprising a radiator disposed behind the front wheels.

In accordance with a possible embodiment, the expansion vessel occupies a longitudinal position comprised between the protective shield and a substantially vertical first reference plane passing through the axis of rotation of the front wheels considering the motorcycle with straight wheels.

In one embodiment, the expansion vessel is located in a substantially central transversal position so as to be substantially symmetrical with respect to a centreline longitudinal plane. In accordance with a preferred embodiment, the protection shield comprises a removable grate which, when removed, allows access to the expansion vessel to allow it to be topped up.

In accordance with one possible embodiment thereof, the expansion vessel comprises a body which includes a bottom surface and a top-up section in a position opposite to the bottom surface, said body comprising two openings each of which is connected to a hydraulic pipe connected to a radiator of the cooling system.

Preferably, the expansion vessel is also connected to the shield by means of removable connection means.

In accordance with a preferred embodiment, the support structure is connected indirectly to the front part of the frame through a connecting structure which extends, at least partially, below the steering head.

In accordance with one possible embodiment thereof, the connecting structure comprises a bracket having a substantially C-shaped cross-section which configures a housing space for electric cables.

In accordance with a possible embodiment, the hydraulic pipes of the cooling system are arranged between the connecting structure and a lower portion of the protection shield.

In a possible embodiment, the support structure of the motorcycle is connected at the top to an upper portion of the front part of the frame.

In a preferred embodiment, the quadrilateral comprises two cross members arranged behind the support structure.

In a possible embodiment, at least one other device for operating the motorcycle is connected to the support structure, wherein said other device remains mainly comprised between the shield and the support structure. Preferably, said other device is selected from a group consisting of a roll block device and an ABS device.

### LIST OF FIGURES

Further features and advantages of the invention will become clearer from the examination of the following detailed description of some preferred, but not exclusive, embodiments of the motorcycle, illustrated by way of non-limiting example, with the aid of the attached drawings, in which:
- Figure 1 is a longitudinal sectional view of a motorcycle front part according to the present invention;
- Figure 2 is a perspective view of the front part of Figure 1 without the protective shield;
- Figure 3 is an enlargement of detail III shown in Figure 1.

The same reference numerals and letters in the figures identify the same elements or components.

### DETAILED DESCRIPTION

With reference to the cited figures, the present invention therefore relates to a three-wheel saddle-ride motorcycle, having two front steering wheels 4 and a rear driving wheel. In the continuation of the description, the ride-on saddle vehicle will be indicated generically with the expression motorcycle 1.

For the purposes of the invention, the expression *"longitudinal direction"* or *"front-rear direction"* means a direction parallel to the forward direction of the motorcycle 1 and orthogonal to the axis of rotation of the drive wheel, while the expression "transverse direction" or "right-left" direction indicates a direction orthogonal to the longitudinal direction, therefore parallel to the axis of rotation of the drive wheel.

The expression *"normal direction"* or *"up-down"* direction indicates a direction orthogonal to the longitudinal direction and to the transverse direction. The figures include Cartesian reference axes indicating the front-back direction F-B, the up-down direction U-D and the right-left direction R-L defined above.

Therefore, the terms "longitudinally or longitudinal" , the terms "transversely or transversely" and the terms "normally or normal" refer respectively to the longitudinal direction, i.e. front-back F-B, to the transverse direction, i.e. right-left R-L, and to the normal direction, i.e. up-down U-D. The terms "anteriorly" , "left" and "above" refer to the lines indicated by the arrows of the half-lines F, L and U visible in the figures. The terms *"posteriorly"* (or *"behind"*)*= "right"* and *"inferiorly"* instead indicate opposite lines to those indicated by the arrows of the half-lines B, R and D.

The expression centreline longitudinal plane is intended to indicate a plane containing the longitudinal parallel to the longitudinal direction F-B and containing the steering axis 110 of the motorcycle. The expression longitudinal section plane means a section plane coinciding with the centreline longitudinal plane.

For the purposes of the invention, the expression "motorcycle with straight wheels" is intended to indicate a condition such that the wheels of the motorcycle are vertical, i.e. such that the centreline longitudinal plane is substantially vertical.

The motorcycle 1 according to the invention comprises a main frame which extends mainly along the front-rear direction F-B. The main frame includes a frame front part 2A and a frame rear part (not shown) which respectively support the front end and the rear end of the motorcycle.

In particular, for the purposes of the invention, the term "front end" indicates the part of the motorcycle 1 in front of a reference plane (not shown) passing through the rearmost point of the handlebar of the motorcycle 1, i.e. through the point of the handlebar closer to the rear wheel. The term *"rear end"* instead intends to indicate the part of the motorcycle 1 rearward to this reference plane.

The rear part of the main frame 2 supports a power assembly (not shown) intended to generate the driving force useful for running the motorcycle 1. Said frame rear part supports, through a rear suspension (not shown), said driving rear wheel (not shown).

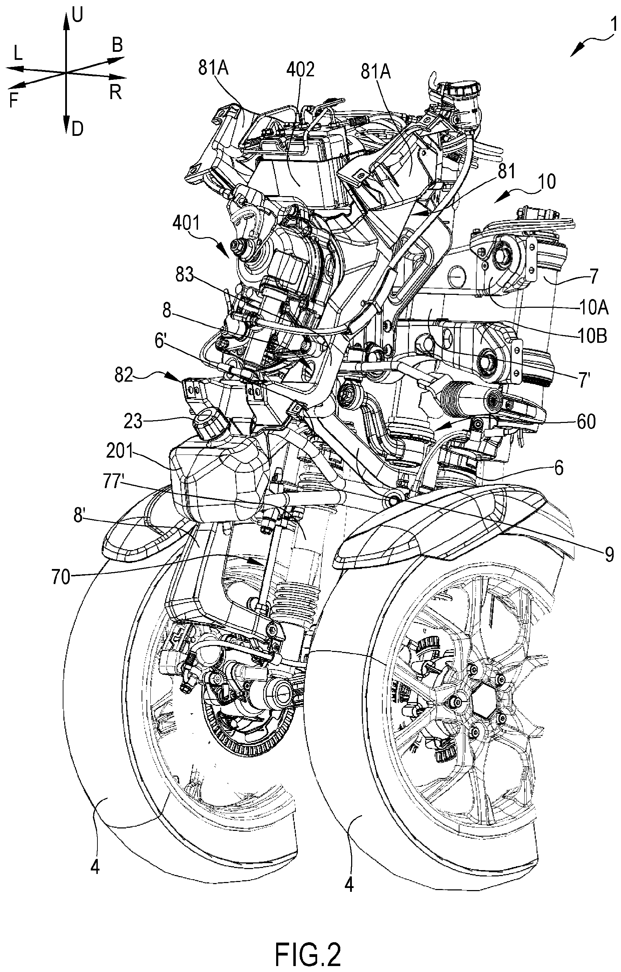

The frame front part 2A comprises a steering head 11 in which a handlebar (not shown) is installed which rotates around a steering axis 110 configured by the same steering head 11. A rolling articulated quadrilateral 10 (hereinafter quadrilateral 10) which supports the two front wheels 4 of the motorcycle 1 is connected to the frame front part 2A. The quadrilateral 10 (indicated in Figure 2) has a per se known configuration and includes an upper cross member 10A and a lower cross member 10B centrally hinged to the frame front part 2A (not shown in Figure 2) so as to rotate around corresponding longitudinal rolling planes parallel to each other and lying on the centreline longitudinal plane. The quadrilateral 10 also comprises a right upright 7 and a left upright 7', each hinged to the upper cross member 10A, so as to rotate around an upper roll axis, and to the lower cross member, so as to rotate around a lower roll axis. The two cross members 10A, 10B extend in the transverse direction R-L so as to be symmetrical with respect to the centreline longitudinal plane. Therefore, the upper roll axes, as well as the lower roll axes, are substantially symmetrical with respect to the centreline longitudinal plane. The movement of the two cross members 10A, 10B with respect to the frame front part 2A determines the deformation of the quadrilateral 10 which occurs substantially in a transverse plane, i.e. parallel to the transverse direction R-L.

A support element 6, 6' which supports, directly or indirectly, a corresponding front wheel 4 is associated with each of the uprights 7, 7' of the quadrilateral 10. The support elements 6, 6' are free to rotate with respect to the corresponding upright 7, 7' so as to allow the steering movement of the front wheels 4. The term indirectly is meant to indicate a condition whereby other components are arranged between an upright 7, 7' and the front wheel 4 which, together with the upright 7, 7', support the corresponding front wheel 4.

The motorcycle 1 further comprises a suspension assembly 70 interposed between the front wheels 4 and the rolling articulated quadrilateral 10, to allow an up and down motion of the wheels themselves with respect to the rolling articulated quadrilateral 10. The suspension assembly comprises first suspension means (not visible) and second suspension means 77' respectively associated with a first and a second of the front wheels 4. The expression *"operatively associated"* is intended to mean a condition whereby the first means 77 and the second suspension means are interposed between the corresponding front wheel 4 and the corresponding upright 7, 7' to allow the lifting and lowering of the wheel itself.

In the front part of the motorcycle 1 there is also arranged a steering assembly 60 for controlling the steering of the front wheels 4. The steering assembly 60 acts on the two support elements 6, 6' causing the rotation thereof with respect to the corresponding uprights 7, 7' of the quadrilateral 10. The steering assembly 60 is activated by the rotation of the aforementioned handlebar of the motorcycle 1 which, as indicated, is also part of the front end.

As indicated above, power means, not shown in the figures, operatively connected to the drive wheel, are provided to allow the motorcycle 1 to travel. These power means are preferably liquid-cooled and for this reason a cooling system is provided comprising a radiator 200, located behind the front wheels 4, and an expansion vessel 201 connected via a pair of hydraulic pipes 251, 252. The operating principle of a cooling system provided with an expansion vessel is known to a person skilled in the art and for this reason not described below.

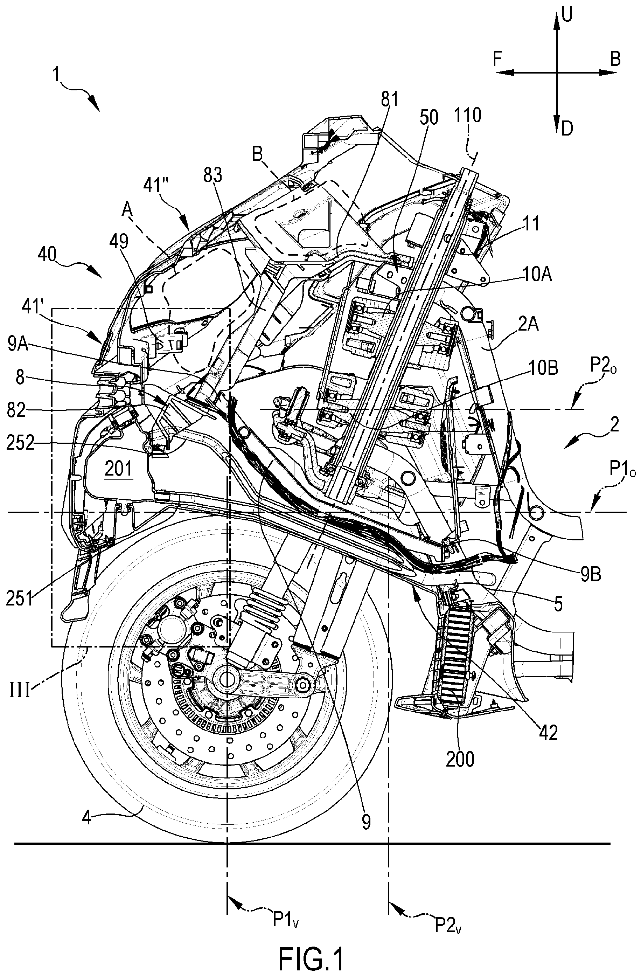

According to the present invention, the motorcycle 1 comprises a support structure 8 (or structure 8) connected, directly or indirectly, to the frame front part 2A and arranged in a front position to the steering head 11. The structure 8 is therefore integral with the frame 2 and follows its rolling movements during the movement of the motorcycle 1. A front shield 40 of the motorcycle 1 which defines its aerodynamic profile is connected to the structure 8. Therefore, through the support structure 8, the shield 40 is integral with the main frame 2. With reference to the sectional view of Figure 1, in the shield 40 a front part 41'- 41" and a lower part 42 are identified. The front part 41'- 41" is substantially the one struck by the air during the advancement of the motorcycle 1 in the direction of travel, while the lower part 42 substantially remains facing the ground on which the motorcycle rests. For the front portion 41' - 41", a first portion 41' having a minor curvature and a second portion 41" having a greater curvature are identified, wherein said curvature is evaluated on the longitudinal section plane. The first portion 41' develops starting from the lower part 42 and remains included between this last one (42) and the second portion 41" with a greater curvature. According to a per se known solution, light projectors 49, which are electrically connected to a battery system supported by the main chassis of the vehicle, are installed on the shield 40. Preferably, at least one pair of light projectors 49 are provided, arranged in a symmetrical position with respect to the centreline longitudinal plane.

According to the present invention, the support structure 8 supports the expansion vessel 201 of the cooling system in a longitudinal position between the shield 40 and the steering head 11. Also this position is evaluated on the longitudinal section plane containing the axis 110 of the steering head 11 and in a condition of a motorcycle 1 with straight wheels.

As shown in Figure 1, preferably the expansion vessel 201 is placed in a position adjacent to the inner surface of the front part 41'- 41" of the shield 40. Even more preferably, the expansion vessel 201 is supported in a longitudinal position between said front part 41'-41" of the shield 40 and a first vertical reference plane P1v passing through the axis of rotation of the front wheels 4, considered in upright position. In the illustrated embodiment, the expansion vessel 201 is located in a region of space adjacent to the junction region between the first portion 41' with minor curvature of the front part 41'-41" and the lower part 42 of the shield 40.

Again with reference to Figure 1, the expansion vessel 201 is preferably arranged in a vertical position comprised between a first horizontal reference plane P1_{O} tangential above the front wheels 4 and a second horizontal reference plane P2_{O} containing the points of intersection between a transversal plane containing the axis 110 of the steering head 11 and the lower longitudinal axes at which the lower cross member 10B is hinged to the uprights of the quadrilateral 10.

In accordance with a preferred embodiment, the expansion vessel 201 is placed in a central position considered along the transversal direction R-L. In this regard, the expansion vessel 201 is preferably configured so as to be substantially symmetrical to the centreline longitudinal plane.

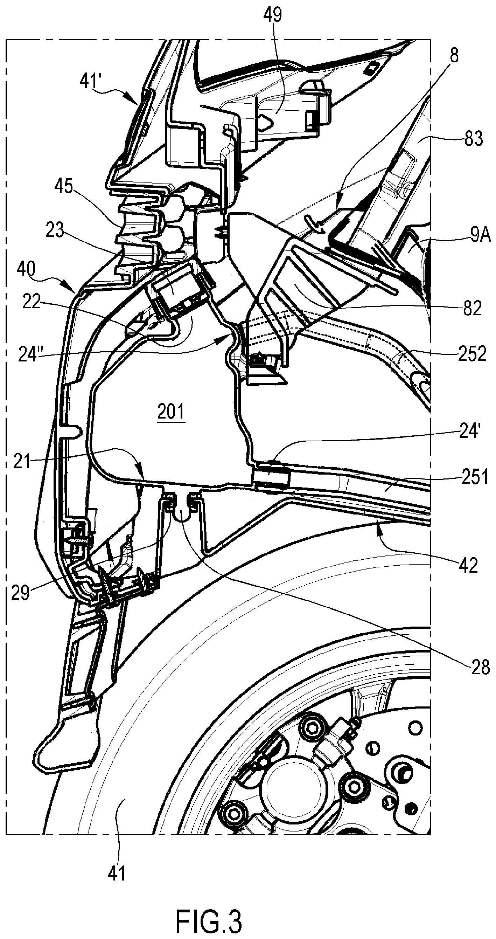

With reference in particular to Figure 3, the expansion vessel 201 is defined by a body, preferably made of plastic material, in which a bottom surface 21 and a liquid top-up section 22 are identified, defined in the upper part of the body in an opposite position to the bottom surface 21. The top-up section 22 is closed by a removable cap 23. The body of the expansion vessel comprises two further openings 24', 24", a lower opening 24' in a position close to the bottom surface 21 and an upper opening 24" in a position adjacent to the top-up section 22. To each of the openings is connected one of the hydraulic pipes 251, 252 which hydraulically connect the expansion vessel 201 to the radiator 200.

Preferably, the shield 40 comprises a removable grate 45 in a position close to the top-up section 22 of the expansion vessel 201. As shown in Figure 3, the removable grate 45 is preferably positioned just above the inlet section 22 of the expansion vessel 201. Advantageously, the removal of the grate 45 allows easy access to the expansion vessel 201 and therefore facilitates the operations for topping up the same.

Preferably, in addition to the support structure 8, the expansion vessel 201 is also connected to the shield 40. This connection is preferably removable in order not to hinder any temporary removal of the shield 40, for example for maintenance and/or replacement operations of the same. With reference to the view of figure 1, a connection is preferably provided made through a male portion (for example a pin 28) integral with the expansion vessel 201 which engages by pressure on a female portion (for example a rubber ring 29) integral with the lower portion 42 of the shield 40.

Preferably, the support structure 8 is connected at the top to a portion 50 of the front part of the frame 2A. Preferably, this connection is defined above the upper cross member 10A of the quadrilateral 10.

With reference to the two cross members 10A, 10B of the quadrilateral, these are arranged behind, i.e. in a rear longitudinal position, the support structure 8.

In the possible embodiment shown in the figures, the support structure 8 comprises an upper portion 81 connected directly to the frame front part 2A (in particular to said portion 50) above the upper cross member 10A of the quadrilateral 10. This upper portion 81 extends, at least partially, in the longitudinal direction.

In the structure 8 there is also a central portion 83 which remains substantially included between the shield 40 and the two cross members 10A, 10B of the rolling quadrilateral 10, as evident from Figure 1. Preferably, the central portion 83 has an inclination similar to that of the transversal plane containing the steering axis 110.

In the structure 8 there is also a lower portion 82 to which the expansion vessel 201 is connected. With respect to the central portion 83, the lower portion 82 has a profile which develops forward in the direction of the shield 40. With reference to Figure 2, the structure 8 is positioned at the centreline of the motorcycle 1 along the transversal direction R-L. Preferably, the structure 8 has a symmetrical shape with respect to the centreline longitudinal plane defined above.

Preferably, the shield 40 is connected to the structure 8 at the lower portion 83 and at the upper portion 81 (see Figures 1 and 3). In general, the shield 40 may be connected to any one or more portions of the shield 40.

In the illustrated embodiment, the structure 8 is indirectly connected to the frame 2 through a connecting structure 9 which extends, at least partially, between the steering head 11 and the lower part 42 of the shield 40. The connecting structure 9 therefore comprises a front end 9A connected to the structure 8 and a rear end 9B connected to the frame 2. These ends 9A, 9B are located on opposite sides with respect to the transversal plane containing the steering axis 110.

In the illustrated embodiment, the connecting structure 9 is connected to the structure 8 substantially between the central portion 83 and the lower portion 82. As evident from Figure 1, the connection structure 9 is underneath the steering assembly 60. Overall, the two structures 8 and 9, considered on the longitudinal sectional plane, define a frame which, together with the steering head 11, longitudinally surrounds the quadrilateral 10, however allowing it to deform.

In a preferred embodiment thereof, the connecting structure 9 comprises a bracket which has a folded longitudinal profile and a C-shaped cross section. In particular, this bracket is arranged so that the two opposite sides of the C face the lower portion 42 of the shield 40. Advantageously, the C-shape of the bracket configures a housing space in which electric cables 5 are arranged to allow the operation of electric components installed on the shield (for example the motorcycle headlights) and or other devices supported by the support structure 8.

With reference to figure 1, the hydraulic pipes 251, 252 which connect the expansion vessel 201 to the radiator 200 are arranged in a position substantially included between the connecting structure 9 and the lower part 42 of the shield 40, in particular below the electric cables 5 mentioned above. In particular, at least for a portion thereof substantially underlying the steering head 11, the two hydraulic pipes 251, 252 have a profile which follows that of the lower part 42, wherein this profile is evaluated on the longitudinal sectional plane. Again with reference to Figure 1, the radiator 200 is preferably arranged in a central position of the motorcycle evaluated along the transversal direction L-R. Furthermore, it is placed in a rearward position to a second vertical reference plane P2ᵥ tangential to the front wheels 4e in a condition of a motorcycle 1 with straight wheels.

According to a preferred embodiment of the invention, the support structure 8 also supports the roll block device 401 of the motorcycle 1. In particular, the roll block device 401 is connected to the central part 83 of the support structure 8 and is positioned longitudinally between the shield 40 and said central part 83. Figure 2 shows the roll block device 401 connected to the support structure 8, while in Figure 1 the dotted shape indicated by the letter A essentially represents the region of space, evaluated on the longitudinal section plane, in which the roll block device 401 is located.

Still with reference to the figures, the support structure 8 preferably also supports the ABS device of the motorcycle 1, indicated with the reference 402. In particular, this device 402 is connected to the upper part 81 so that it remains substantially between it and the upper portion 41" of the front part 41'-41" of the shield 40. In Figure 2 it is possible to observe the position of the ABS between two sides 81A of the upper part 81, while in Figure 1 the shape indicated by the letter B represents the region of space in which the ABS device is mainly located. Again with reference to Figure 1, it can be observed that the ABS device is located above the upper cross member 10A of the quadrilateral 10 also in a position easily accessible following the removal of the shield 40.

In general, the support structure 8 advantageously supports one or more devices 401, 402 intended to allow the movement of the motorcycle 1. These devices 401, 402 are easily accessible, following the removal of the shield 40, precisely because they are located between the support structure 8 and the shield 40.

The motorcycle 1 according to the invention allows the intended tasks and purposes to be fully accomplished. Advantageously, the support structure 8 is multi-purpose and supports a plurality of components of the front end, optimising their position especially in terms of accessibility.

## Claims

1. A saddle-ride type motorcycle (1) comprising at least two front steerable and rolling wheels (4) and at least one rear drive wheel, wherein said motorcycle (1) further comprises a main frame (2) supporting a power assembly, said frame (2) comprising a frame front part (2A) configuring a steering head (11), wherein said motorcycle (1) comprises:
- a rolling articulated quadrilateral (10) connected to said frame front part (2A) and supporting said front wheels (4) so as to allow a rolling movement thereof;
- a suspension assembly (70) interposed between said front wheels (4) and said articulated quadrilateral (10), to allow an up and down movement of said front wheels (4) with respect to said articulated quadrilateral (10);
- a steering assembly (60) configured to steer said front wheels (4);
wherein it comprises a support structure (8) directly or indirectly connected to said frame front part (2A), wherein a protection shield (40) of said motorcycle (1) and an expansion vessel (201) of a cooling system of said power assembly are connected to said support structure (8), wherein said expansion vessel (201) is arranged in a space defined between said shield (40) and said steering head (11), **characterized in that** said cooling system of said power assembly comprises a radiator (200) arranged at the rear of said front wheels (4).

2. Motorcycle (1) according to claim 1, wherein said expansion vessel (201) is arranged in front of a substantially vertical first reference plane (P1_{V}) passing through the axis of rotation of said front wheels (4), said motorcycle (1) being considered in a straight-wheels condition.

3. Motorcycle (1) according to any one of the preceding claims, wherein said expansion vessel (201) is arranged in a substantially central transverse position and configured to be substantially symmetrical with respect to a centreline longitudinal plane.

4. Motorcycle (1) according to any one of the preceding claims, wherein said shield (40) comprises a removable grate (45) which, when removed, provides access to said expansion vessel (201) to allow refilling thereof.

5. Motorcycle (1) according to any one of the preceding claims, wherein said expansion vessel (201) comprises a body including a bottom surface (21) and a top-up section (22) in a position opposite said bottom surface (21), said body comprising two openings (24A, 24B) to each of which is connected a hydraulic pipe (251, 252) connected to said radiator (200) of said cooling system.

6. Motorcycle (1) according to any one of the preceding claims, wherein said expansion vessel (201) is also connected to said shield (40) by means of removable connecting means.

7. Motorcycle (1) according to any one of the preceding claims, wherein said support structure (8) is indirectly connected to said frame front part (2A) through a connecting structure (9) which develops, at least partially, below said steering head (11).

8. Motorcycle (1) according to any one of the preceding claims, wherein said connecting structure (9) comprises a bracket having a substantially C-shaped cross-section configuring a housing space for electrical cables (5).

9. Motorcycle (1) according to any one of claims 6 to 8, wherein hydraulic pipes (251, 252) of said cooling system are arranged between said connecting structure (9) and a lower portion (42) of said protective shield (40).

10. Motorcycle (1) according to any one of the preceding claims, wherein said support structure (8) is connected at the top to an upper portion (50) of said frame front part (2A).

11. Motorcycle (1) according to any one of the preceding claims, wherein said articulated quadrilateral (10) comprises two cross-members (10A, 10B) arranged behind the support structure (8).

12. Motorcycle (1) according to any one of the preceding claims, wherein at least one other device (401, 402) for operating said motorcycle (1) is connected to said support structure (8), wherein said other device is mainly comprised between said shield (40) and said support structure (8).

13. Motorcycle (1) according to claim 12, wherein said other device is selected from a group consisting of a roll block device (401) of said articulated quadrilateral (10) and an ABS device (402).

## Patentansprüche

1. Motorrad (1) vom Sitzsatteltyp, das mindestens zwei lenkbare und rollende Vorderräder (4) und mindestens ein hinteres Antriebsrad umfasst, wobei das Motorrad (1) ferner einen Hauptrahmen (2) umfasst, der eine Leistungsanordnung trägt, wobei der Rahmen (2) einen vorderen Rahmenteil (2A) umfasst, der einen Lenkkopf (11) ausbildet, wobei das Motorrad (1) umfasst:
- ein rollendes Gelenkviereck (10), das mit dem vorderen Rahmenteil (2A) verbunden ist und die Vorderräder (4) stützt, um deren Rollbewegung zu ermöglichen;
- eine Aufhängungsanordnung (70), die zwischen den Vorderrädern (4) und dem Gelenkviereck (10) angeordnet ist, um eine Auf- und Abbewegung der Vorderräder (4) in Bezug auf das Gelenkviereck (10) zu ermöglichen;
- eine Lenkanordnung (60), die zum Lenken der Vorderräder (4) ausgebildet ist; wobei es eine Stützstruktur (8) umfasst, die direkt oder indirekt mit dem vorderen Rahmenteil (2A) verbunden ist, wobei eine Schutzabschirmung (40) des Motorrads (1) und ein Ausdehnungsgefäß (201) eines Kühlsystems der Leistungsanordnung mit der Stützstruktur (8) verbunden sind, wobei das Ausdehnungsgefäß (201) in einem Raum angeordnet ist, der zwischen der Abschirmung (40) und dem Lenkkopf (11) definiert ist, **dadurch gekennzeichnet, dass**
das Kühlsystem der Leistungsanordnung einen Kühler (200) umfasst, der hinter den Vorderrädern (4) angeordnet ist.

2. Motorrad (1) nach Anspruch 1, wobei das Ausdehnungsgefäß (201) vor einer im Wesentlichen vertikalen ersten Bezugsebene (P1ᵥ) angeordnet ist, die durch die Drehachse der Vorderräder (4) verläuft, wobei das Motorrad (1) in einem Zustand mit geraden Rädern betrachtet wird.

3. Motorrad (1) nach einem der vorhergehenden Ansprüche, wobei das Ausdehnungsgefäß (201) in einer im Wesentlichen zentralen Querposition angeordnet und dazu ausgebildet ist, in Bezug auf eine Längsmittelebene im Wesentlichen symmetrisch zu sein.

4. Motorrad (1) nach einem der vorhergehenden Ansprüche, wobei die Abschirmung (40) ein abnehmbares Gitter (45) umfasst, das, wenn es entfernt wird, Zugang zu dem Ausdehnungsgefäß (201) gewährt, um dessen Nachfüllen zu ermöglichen.

5. Motorrad (1) nach einem der vorhergehenden Ansprüche, wobei das Ausdehnungsgefäß (201) einen Körper umfasst, der eine Bodenfläche (21) und einen Nachfüllabschnitt (22) in einer der Bodenfläche (21) gegenüberliegenden Position aufweist, wobei der Körper zwei Öffnungen (24A, 24B) umfasst, mit denen jeweils eine Hydraulikleitung (251, 252) verbunden ist, die mit dem Kühler (200) des Kühlsystems verbunden ist.

6. Motorrad (1) nach einem der vorhergehenden Ansprüche, wobei das Ausdehnungsgefäß (201) mittels eines lösbaren Verbindungsmittels auch mit der Abschirmung (40) verbunden ist.

7. Motorrad (1) nach einem der vorhergehenden Ansprüche, wobei die Stützstruktur (8) über eine Verbindungsstruktur (9), die sich zumindest teilweise unterhalb des Lenkkopfes (11) erstreckt, indirekt mit dem vorderen Rahmenteil (2A) verbunden ist.

8. Motorrad (1) nach einem der vorhergehenden Ansprüche, wobei die Verbindungsstruktur (9) eine Halterung mit einem im Wesentlichen C-förmigen Querschnitt umfasst, die einen Aufnahmeraum für elektrische Kabel (5) ausbildet.

9. Motorrad (1) nach einem der Ansprüche 6 bis 8, wobei Hydraulikleitungen (251, 252) des Kühlsystems zwischen der Verbindungsstruktur (9) und einem unteren Abschnitt (42) der Schutzabschirmung (40) angeordnet sind.

10. Motorrad (1) nach einem der vorhergehenden Ansprüche, wobei die Stützstruktur (8) oben mit einem oberen Abschnitt (50) des vorderen Rahmenteils (2A) verbunden ist.

11. Motorrad (1) nach einem der vorhergehenden Ansprüche, wobei das Gelenkviereck (10) zwei hinter der Stützstruktur (8) angeordnete Querstreben (10A, 10B) umfasst.

12. Motorrad (1) nach einem der vorhergehenden Ansprüche, wobei mindestens eine weitere Vorrichtung (401, 402) zum Betreiben des Motorrads (1) mit der Stützstruktur (8) verbunden ist, wobei sich die weitere Vorrichtung hauptsächlich zwischen der Abschirmung (40) und der Stützstruktur (8) befindet.

13. Motorrad (1) nach Anspruch 12, wobei die weitere Vorrichtung aus einer Gruppe ausgewählt ist, die aus einer Rollblock-Vorrichtung (401) des Gelenkvierecks (10) und einer ABS-Vorrichtung (402) besteht.

## Revendications

1. Motocyclette du type monté à califourchon (1) comprenant au moins deux roues de roulement directrices avant (4) et au moins une roue motrice arrière, dans laquelle ladite motocyclette (1) comprend en outre un châssis principal (2) supportant un ensemble de puissance, ledit châssis (2) comprenant une partie avant de châssis (2A) configurant une tête de direction (11), dans laquelle ladite motocyclette (1) comprend :
- un quadrilatère articulé roulant (10) relié à ladite partie avant de châssis (2A) et supportant lesdites roues avant (4) de manière à permettre un mouvement de roulement de celles-ci ;
- un ensemble de suspension (70) interposé entre lesdites roues avant (4) et ledit quadrilatère articulé (10), pour permettre un mouvement vers le haut et vers le bas desdites roues avant (4) par rapport audit quadrilatère articulé (10) ;
- un ensemble de direction (60) configuré pour diriger lesdites roues avant (4) ; dans laquelle elle comprend une structure de support (8) reliée directement ou indirectement à ladite partie avant de châssis (2A), dans laquelle un bouclier de protection (40) de ladite motocyclette (1) et un récipient de détente (201) d'un système de refroidissement dudit ensemble de puissance sont reliés à ladite structure de support (8), dans laquelle ledit récipient de détente (201) est disposé dans un espace défini entre ledit bouclier (40) et ladite tête de direction (11), **caractérisée en ce que**
ledit système de refroidissement dudit ensemble de puissance comprend un radiateur (200) disposé à l'arrière desdites roues avant (4).

2. Motocyclette (1) selon la revendication 1, dans laquelle ledit récipient de détente (201) est disposé devant un premier plan de référence sensiblement vertical (P1ᵥ) passant par l'axe de rotation desdites roues avant (4), ladite motocyclette (1) étant considérée dans un état de roues droites.

3. Motocyclette (1) selon l'une quelconque des revendications précédentes, dans laquelle ledit récipient de détente (201) est disposé dans une position transversale sensiblement centrale et configuré pour être sensiblement symétrique par rapport à un plan longitudinal d'axe central.

4. Motocyclette (1) selon l'une quelconque des revendications précédentes, dans laquelle ledit bouclier (40) comprend une grille amovible (45) qui, lorsqu'elle est retirée, donne accès audit récipient de détente (201) pour permettre son remplissage.

5. Motocyclette (1) selon l'une quelconque des revendications précédentes, dans laquelle ledit récipient de détente (201) comprend un corps comprenant une surface inférieure (21) et une section d'appoint (22) dans une position opposée à ladite surface inférieure (21), ledit corps comprenant deux ouvertures (24A, 24B) à chacune desquelles est relié un tuyau hydraulique (251, 252) relié audit radiateur (200) dudit système de refroidissement.

6. Motocyclette (1) selon l'une quelconque des revendications précédentes, dans laquelle ledit récipient de détente (201) est également relié audit bouclier (40) par des moyens de liaison amovibles.

7. Motocyclette (1) selon l'une quelconque des revendications précédentes, dans laquelle ladite structure de support (8) est indirectement reliée à ladite partie avant de châssis (2A) par l'intermédiaire d'une structure de liaison (9) qui se développe, au moins partiellement, en dessous de ladite tête de direction (11).

8. Motocyclette (1) selon l'une quelconque des revendications précédentes, dans laquelle ladite structure de liaison (9) comprend un étrier ayant une section transversale sensiblement en forme de C configurant un espace de logement pour des câbles électriques (5).

9. Motocyclette (1) selon l'une quelconque des revendications 6 à 8, dans laquelle des tuyaux hydrauliques (251, 252) dudit système de refroidissement sont disposés entre ladite structure de liaison (9) et une partie inférieure (42) dudit bouclier de protection (40).

10. Motocyclette (1) selon l'une quelconque des revendications précédentes, dans laquelle ladite structure de support (8) est reliée en haut à une partie supérieure (50) de ladite partie avant de châssis (2A).

11. Motocyclette (1) selon l'une quelconque des revendications précédentes, dans laquelle ledit quadrilatère articulé (10) comprend deux traverses (10A, 10B) disposées derrière la structure de support (8).

12. Motocyclette (1) selon l'une quelconque des revendications précédentes, dans laquelle au moins un autre dispositif (401, 402) pour faire fonctionner ladite motocyclette (1) est relié à ladite structure de support (8), dans laquelle ledit autre dispositif est principalement compris entre ledit bouclier (40) et ladite structure de support (8).

13. Motocyclette (1) selon la revendication 12, dans laquelle ledit autre dispositif est sélectionné dans un groupe constitué d'un dispositif de blocage à rouleau (401) dudit quadrilatère articulé (10) et d'un dispositif ABS (402).
